# EUROPEAN PATENT APPLICATION

(11) **EP 1 760 596 A1**
(43) Date of publication of application: **07.03.2007**
(21) Application number: 05751441.6
(22) Date of filing: 06.06.2005
(51) Int. Cl.: G06F 12/14, G06K 17/00, H04M 1/725, H04M 11/00, H04Q 7/38

(54) **MOBILE COMMUNICATION TERMINAL AND DATA ACCESS CONTROL METHOD**

(30) Priority: 11.06.2004 JP 2004174625
(71) Applicant: NTT DoCoMo, Inc., Tokyo 100-6150 (JP)
(72) Inventor: HATTORI, Yasunori I. P. Dept. NTT DoCoMo, Inc., Chiyoda-ku, Tokyo 1006150 (JP)
(74) Representative: GROSSE BOCKHORNI SCHUMACHER
(86) International application number: PCT/JP2005/010363
(87) International publication number: WO 2005/121974

(57) **Abstract**

This mobile communication terminal 1 is provided with a noncontact IC card 8, a platform part 3 being an application program interface for getting an application program 7 running, an application management part 5 for controlling activation and deactivation of the application program 7, and an access control part 6 operating in the platform part3 for relaying access from the application program 7 to the noncontact IC card 8, and, when detecting unauthorized access from the application program 7 to the noncontact IC card 8, the access control part 6 instructs the application management part 5 to deactivate the application program 7.

## Description

### Technical Field

The present invention relates to a mobile communication terminal and a data access control method.

### Background Art

There are conventional operations wherein application programs used in games, electronic trading, etc. are downloaded and executed in mobile communication terminals such as cell phones. In such operations, an application program performs data communication with an external server installed in a content provider or the like. A technique for enhancing security during such communication by the application program is, for example, an unauthorized access preventing method of preventing unauthorized access to a computer as described in Patent Document 1 below. In this unauthorized access preventing method, when unauthorized access to a Web document open to public on a computer is detected, an operating system is shut down to inhibit the unauthorized access.
Patent Document 1: Japanese Patent Application Laid-Open No. 2003-263413

### Disclosure of the Invention

### Problem to be Solved by the Invention

However, the above-described unauthorized access preventing method is able to detect the unauthorized access from the outside through a network, but it is difficult to detect unauthorized access of an internal application program gotten from an Web server or the like. This tendency is more prominent, particularly, in mobile communication terminals incorporating an IC card storing transaction data, remaining amount data, or the like. Namely, even if an application program created by a malicious content provider makes unauthorized access to the IC card, the state of unauthorized access cannot be detected unless traces of the unauthorized access flow out.

On the other hand, a conceivable method is to monitor consistency of data in the IC card before and after access. In this case, however, it is feasible to prevent falsification of data, while it is inadequate to prevent unauthorized acquisition of data.

The present invention has been accomplished in view of the above problem and an object of the present invention is therefore to provide a mobile communication terminal and a data access control method capable of adequately preventing unauthorized access from an application program to an internal IC card.

### Means for Solving the Problem

In order to solve the above problem, a mobile communication terminal according to the present invention comprises a noncontact IC card; a platform part being an application program interface for getting an application program running; an application management part for controlling activation and deactivation of an application program; and an access control part operating in the platform part, and adapted to relay access from an application program to the noncontact IC card; wherein, when detecting unauthorized access from an application program to the noncontact IC card, the access control part instructs the application management part to deactivate the application program.

In another aspect, a data access control method according to the present invention is a data access control method of controlling data access of an application program running on a platform in a mobile communication terminal incorporating a noncontact IC card, comprising: an access control step wherein an access control part operating in the platform part relays access from an application program to the noncontact IC card; and a program deactivation step wherein, when detecting unauthorized access from an application program, the access control part instructs an application management part, which is adapted to control activation and deactivation of an application program, to deactivate the application program.

In the mobile communication terminal and the data access control method as described above, the access control part independent of application programs relays access of an application program to the noncontact IC card and, when detecting unauthorized access in the relay process, the access control part effects the control to deactivate the application program. Since the part different from the application program, particularly, the platform normally hard to falsify is provided with the data access function as described above, unauthorized access can be detected more securely even in a case where the application program itself contains an unauthorized code.

### Effect of the Invention

The mobile communication terminal of the present invention is able to adequately prevent unauthorized access from an application program to an internal IC card.

### Brief Description of the Drawings

Fig. 1 is a schematic configuration diagram showing a preferred embodiment of a mobile communication terminal according to the present invention.
Fig. 2 is an example of a configuration diagram of data stored in an access authority storage part in Fig. 1.
Fig. 3 is an example of a configuration diagram of data stored in a counter information storage part in Fig. 1.
Fig. 4 is a flowchart showing an operation of a mobile communication terminal in a data access control making use of access authority information.
Fig. 5 is a flowchart showing an operation of a mobile communication terminal in a data access control making use of a response content from a noncontact IC card.

### Description of Reference Symbols

mobile communication terminal; 2 operating-system operating environment; 3 platform part; 4 data area; 5 application management part; 6 access control part; 7a, 7b, 7c (7) application programs; 8 noncontact IC card; 10 content server; 11 access control server; 20 communication network.

### Best Mode for Carrying out the Invention

A preferred embodiment of the mobile communication terminal according to the present invention will be described below in detail with reference to the drawings. In the description of the drawings the same elements will be denoted by the same reference symbols, without redundant description.

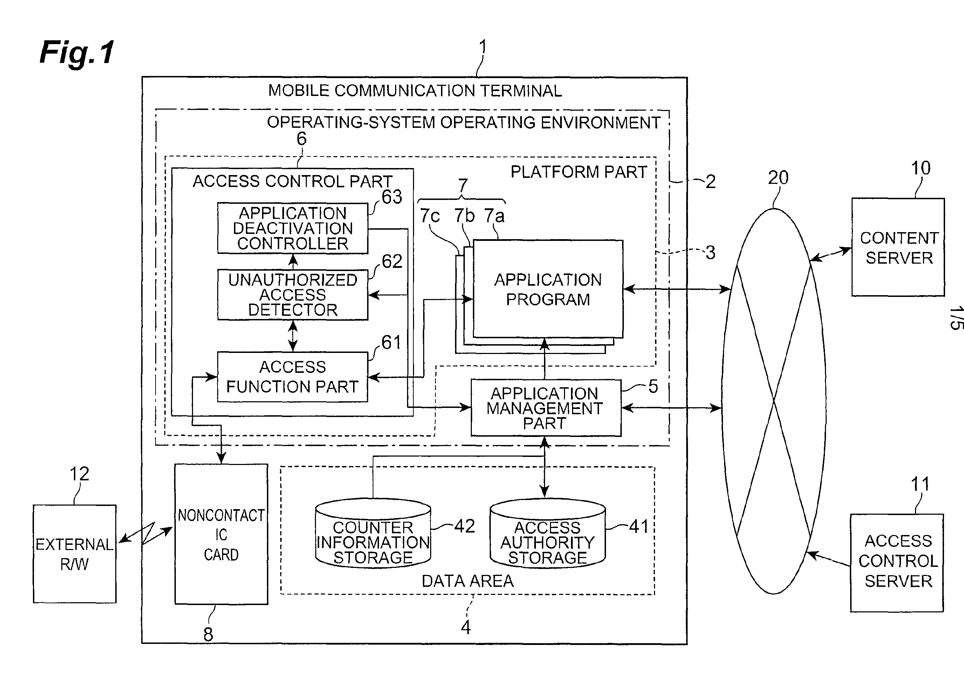

Fig. 1 is a schematic configuration diagram showing a preferred embodiment of the mobile communication terminal according to the present invention. The mobile communication terminal 1 shown in the same figure is a communication terminal having an environment in which application programs to implement a game function, an electronic trading function, a standby image display function, etc. can run. Examples of such communication terminals include devices capable of performing information communication through a network, such as cell phones, PHS (Personal Handyphone System), and PDA (Personal Digital Assistance). As shown in Fig. 1, the mobile communication terminal 1 is composed of the following functional components: operating-system operating environment 2, platform part 3 constructed on the operating-system operating environment 2, application management part 5 operating on the operating-system operating environment 2, and data area 4, and internally has noncontact IC card 8.

The noncontact IC (Integrated Circuit) card 8 internally has an antenna, an IC chip, and a memory and is constructed to be able to perform noncontact data communication through radio waves with external R/W (Reader/Writer) 12. In this data communication, the external R/W 12 is allowed to access (read/write) the memory of the noncontact IC card 8. At the same time, the noncontact IC card 8 is wired to an internal circuit (not shown) of the mobile communication terminal 1 so as to be able to perform data communication with an application program running on the mobile communication terminal 1 (the details of which will be described later).

The memory built in this noncontact IC card 8 is segmentalized into a plurality of hierarchical regions and access from the outside is made in the segmentalized region units. More specifically, this memory is divided into a plurality of regions called systems, and each system is further segmentalized into a plurality of regions called areas. This hierarchical structure of the memory makes it feasible, for example, to use the regions of the systems separately among service providers of electronic trading services or the like, or to use the regions of the areas separately among types of services.

Furthermore, the noncontact IC card 8 has an authentication function for access from the outside. This authentication is carried out by receiving an authentication code such as a personal identification number or by receiving data storage area information to specify a system and an area as described above. The noncontact IC card also returns an authentication result to an external access entity.

The operating-system operating environment 2 is an operating environment which is constructed on hardware such as a CPU (Central Processing Unit) and a RAM (Random Access Memory) and in which a system program, such as an OS (Operating System) to perform management of files, management of memories, management of input and output of data, provision of a user interface, and so on, is resident. In addition, fundamental programs for implementing the call function, e-mail transmitting/receiving function, Internet connection function, etc. being the basic functions of mobile communication terminal 1 are further executed on the operating-system operating environment 2.

The data area 4 is a data area which is constructed on memories such as a RAM (Random Access Memory), a ROM (Read Only Memory), and a magnetic disk and which stores system data used by the system program such as the OS, basic data such as address book data used by the fundamental programs, various program files, data referenced by application management part 5 described later, and so on.

The platform part 3 is a program execution environment in which a JAVA (registered trademark) virtual machine program (not shown) for executing an application program described in the JAVA (registered trademark) language is resident. An "application program" stated hereinafter will refer to a program except for the system program and the fundamental programs, and program downloaded from the outside, e.g., from a WWW server and executed. This JAVA (registered trademark) virtual machine program has the following function during execution of an application program: it converts a code of the application program into a code that can be interpreted by the operating-system operating environment 2 and transfers the interpreted code to the operating-system operating environment 2. Furthermore, the platform part 3 is provided with a plurality of APIs (Application Program Interfaces), which are functions that can be called from application programs.

Application programs 7a, 7b, and 7c are executed on the platform part 3. The application programs 7a, 7b, 7c are programs that were downloaded once from content server 10 into the data area 4 by the application management part 5 and that are then activated on the platform part 3 on the basis of a user's command. The application programs 7a, 7b, 7c are configured to be able to perform HTTP (Hyper Text Transfer Protocol) communication through communication network 20 with content server 10.

The application management part 5 is a part that is operating on the operating-system operating environment 2 and that controls a download of application program 7, and activation and deactivation of application program 7.

More specifically, the application management part 5 acquires a JAR (Java (registered trademark) ARchiver) file in which codes of an application program 7 are stored, from a content server 10 in accordance with an instruction from the user of mobile communication terminal 1 and downloads it into a predetermined area in the data area 4. In addition, based on an instruction from the user, the application management part 5 reads the JAR file and controls activation of the application program 7. Furthermore, the application management part 5 also has a function of controlling deactivation of the application program 7 on the basis of an instruction from the user and an instruction from the access control part 6 (the details of which will be described later). This deactivation of the application program 7 may be effected by terminating a process of the application program 7 or by deleting or changing a program file, a parameter file, or the like of the application program 7.

The access control part 6 is a part that is operating in the platform part 3 and that relays access (read/write) from application program 7 to noncontact IC card 8. The access control part 6 is composed of the following functional components: access function part 61, unauthorized access detector 62, and application deactivation controller 63. Each of the components will be described below in detail.

The access function part 61 is a part including a plurality of APIs for access to the noncontact IC card 8. The access function part 61 accepts an API call (access request) from an application program 7 and thereafter sends an access request signal to the noncontact IC card 8. This API call is effected by designating an API name to specify an object API, and an authentication parameter necessary for access. Furthermore, it relays a response and reference data sent out in response to the access request signal from the noncontact IC card 8, to the application program 7. The reference data is data read out of the memory in the noncontact IC card 8 in conjunction with the access request.

The access function part 61 also performs the following operation: with an API call from an application program 7, it outputs an API name of the called API and a response from the noncontact IC card 8 to the unauthorized access detector 62.

The unauthorized access detector 62 is a part that, upon detection of unauthorized access from an application program 7, instructs the application management part 5 to deactivate the application program 7. The detection of unauthorized access by the unauthorized access detector 62 will be described below.

### (Detection of Unauthorized Access with Access Authority Information)

The unauthorized access detector 62 outputs an API name of an API called by an application program 7, to the application management part 5. Receiving it, the application management part 5 refers to access authority information stored in access authority storage 41 located in the data area 4, and returns a permission flag to the unauthorized access detector 62. This access authority information is information to indicate an access authority of the application program 7 to the noncontact IC card 8, and is preliminarily acquired from access control server 11 by the application management part 5.

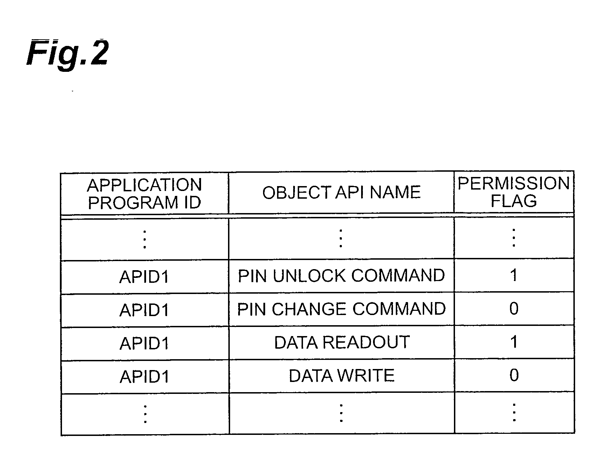

Fig. 2 shows an example of a configuration diagram of data stored in the access authority storage 41 in this case. As shown in the same figure, the access authority storage 41 stores application program IDs each of which specifies an application program and API names each of which specifies an API, each in association with a permission flag (0/1). In this example of access authority information, it is indicated that an API "data readout" call by application program 7a specified by application program ID "APID1" is permitted by permission flag "1." On the other hand, it is also indicated that an API "data write" call by application program 7a is not permitted by permission flag "0." It is preferred that the data stored in the access authority storage 41 can be referenced and written by the application management part 5 only, in order to further enhance the security.

According to the example of Fig. 2, when the application program 7a calls API "data write," the application management part 5 thus returns the permission flag "0" corresponding to the application program ID "APID1" of the application program 7a and the API name "data write," to the unauthorized access detector 62.

Returning to Fig. 1, when the permission flag returned from the application management part 5 is "0" representing "prohibited," the unauthorized access detector 62 detects unauthorized access from the application program 7 and notifies the application deactivation controller 63 of it.

### (Detection of Unauthorized Access with Response Content from Noncontact IC Card)

In addition to the detection of unauthorized access with the access authority information as described above, the unauthorized access detector 62 also performs detection of unauthorized access with a response content from noncontact IC card 8 as described below.

Namely, when a content of a response from noncontact IC card 8 contains information indicating an access failure, the unauthorized access detector 62 outputs an API name of an API called by application program 7, to the application management part 5.

Examples of cases where the response from the noncontact IC card 8 indicates an access failure include a case where an application program 7 calls an API necessitating authentication with a personal identification number (authentication code) and where the application program 7 designates an incorrect personal identification number as an authentication parameter, and a case where an application program 7 calls an API necessitating authentication with data storage area information and where the application program 7 designates nonexistent data storage area information as an authentication parameter. Here the data storage area information is information to designate an accessed data storage area in the memory in the noncontact IC card 8 and is composed of a system code to specify a system and an area code to specify an area.

Receiving the API name, the application management part 5 references a fail counter stored in counter information storage 42 in the data area 4 and returns a permission flag to indicate whether an access failure count is within a permitted number, to the unauthorized access detector 62. This fail counter may be one preliminarily set in mobile communication terminal 1 or may be one acquired from the access control server 11 or the like.

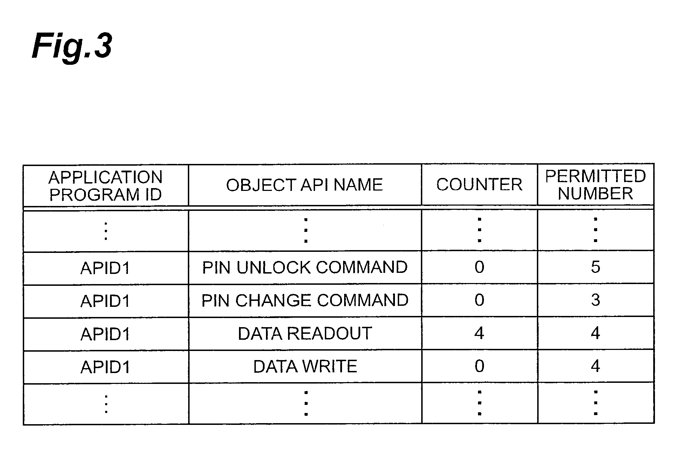

Fig. 3 shows an example of a configuration diagram of the fail counter stored in the counter information storage 42 in this case. As shown in the same figure, the counter information storage 42 stores application program IDs each of which specifies an application program and API names each of which specifies an API, each in association with a counter and a permitted number. In this example of the fail counter, it is indicated as to calling of API "data readout" by application program 7a specified by the application program ID "APID1" that access failures were detected "4" times heretofore and that access failures are permitted up to the count "4." On the other hand, it is indicated as to calling of API "PIN unlock command" by application program 7a that no access failure was detected heretofore and that access failures are permitted up to the count "5." It is preferable that the data stored in the counter information storage 42 can be referenced and written by the application management part 5 only, in order to further enhance the security.

Then the application management part 5 adds 1 to the counter corresponding to the object application and API with an access failure returned. It returns the permission flag "1" to the unauthorized access detector 62 if the added counter is within the permitted number; it returns the permission flag "0" to the unauthorized access detector 62 if the added counter exceeds the permitted number.

Returning to Fig. 1, when the permission flag returned from the application management part 5 is "0" representing "prohibited," the unauthorized access detector 62 detects unauthorized access from the application program 7 and notifies the application deactivation controller 63 of it.

The application deactivation controller 63 is a part that, when receiving the notification of the unauthorized access detection from the unauthorized access detector 62, instructs the application management part 5 to deactivate the application program 7 with which the unauthorized access was detected. In response thereto, the application management part 5 controls deactivation of associated application program 7 to deactivate the application program 7.

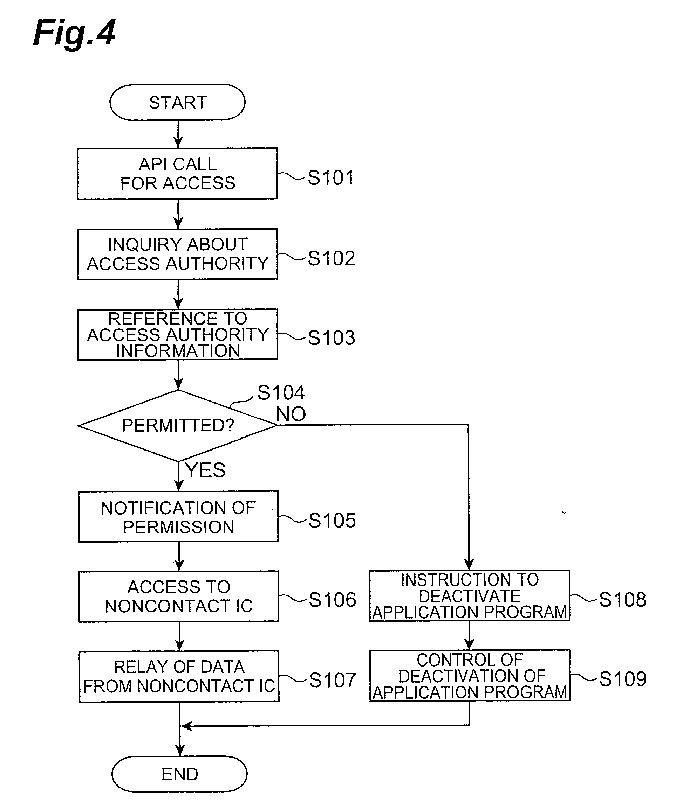

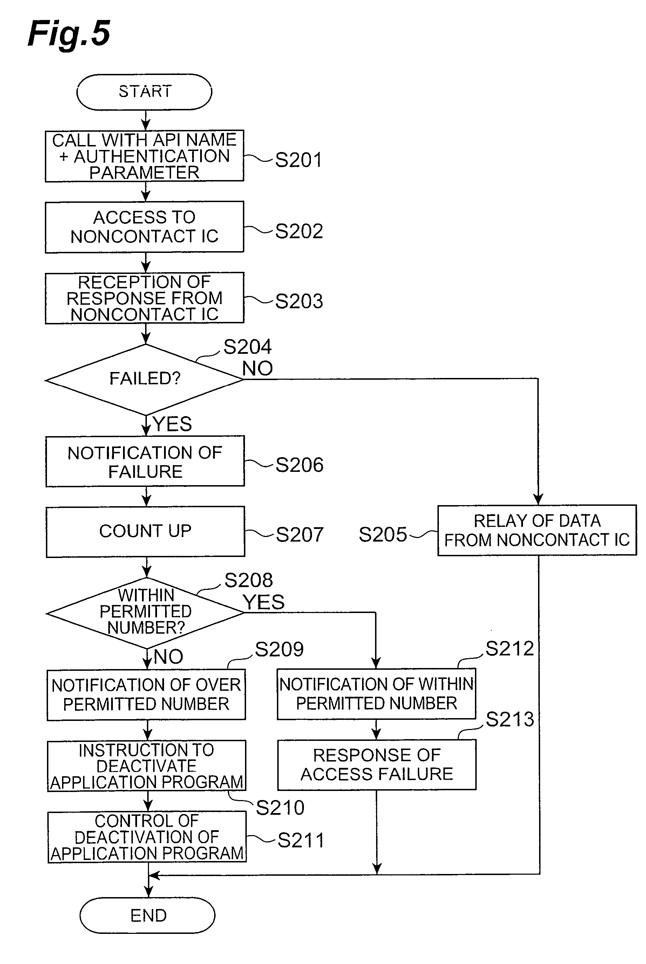

Next, the operation of mobile communication terminal 1 will be described with reference to Figs. 4 and 5, while detailing a data access control method in the mobile communication terminal 1. Fig. 4 is a flowchart showing an operation of mobile communication terminal 1 during the data access control making use of the access authority information, and Fig. 5 a flowchart showing an operation of mobile communication terminal 1 during the data access control making use of the response content from the noncontact IC card.

First, the operation of mobile communication terminal 1 during the data access control making use of the access authority information will be described with reference to Fig. 4.

First, as triggered by a user's operation or the like, an application program 7a requests the access function part 61 to call an API for access to the noncontact IC card 8 (step S101). In response thereto, the access function part 61 outputs an API name of the called API to the unauthorized access detector 62 and thereafter the unauthorized access detector 62 inquires at the application management part 5 about the access authority information of the associated API of the application program 7a (step S102).

Then the application management part 5 references the access authority information stored in the access authority storage 41, based on the API name of the called API and the application program ID of the application program 7a calling the API (step S103). Then the unauthorized access detector 62 determines whether the permission flag in the access authority information is "1" representing "permitted" (step S104).

When the result of the above determination is that the permission flag is "1" (step S104; YES), the unauthorized access detector 62 notifies the access function part 61 that the access to the noncontact IC card 8 is permitted (step S105). Then the access function part 61 sends an access request signal corresponding to the API called by the application program 7a, to the noncontact IC card 8 (step S106). Thereafter, the access function part 61 relays a response and reference data returned from the noncontact IC card 8, to the application program 7 a (step S107).

On the other hand, when the permission flag is "0" (step S104; NO), the application deactivation controller 63 instructs the application management part 5 to deactivate the application program 7a (step S108). In response thereto, the application management part 5 performs the control to deactivate the application program 7a (step S109).

Next, the operation of mobile communication terminal 1 during the data access control making use of the response content from the noncontact IC card 8 will be described with reference to Fig. 5. The processing described below is one in a case where the application program 7a calls an API with a personal identification number necessary for access to the noncontact IC card 8 or with an authentication parameter such as the data storage area information.

First, as triggered by a user's operation or the like, the application program 7a requests the access function part 61 to call an API for access to the noncontact IC card 8 (step S201). This API call is effected by designating an API name and an authentication parameter. In response thereto, the access function part 61 sends to the noncontact IC card 8, an access request signal corresponding to the API name along with the authentication parameter (step S202). Thereafter, when the access function part 61 receives a response from the noncontact IC card 8, it outputs the response and API name to the unauthorized access detector 62 (step S203).

The unauthorized access detector 62 determines whether the response content from the noncontact IC card 8 contains information to indicate an access failure (step S204). When the result of the determination is that the response content does not indicate an access failure (step S204; NO), the access function part 61 relays the response and, the reference data returned from the noncontact IC card 8 to the application program 7a (step S205).

On the other hand, when the result of the determination is that the response content indicates an access failure (step S204; YES), the access function part 61 outputs the API name of the API called by the application program 7a, to the application management part 5 (step S206). In response thereto, the application management part 5 reads the counter and permitted number corresponding to the API name and the application program ID of the application program 7a out of the access authority storage 41 and thereafter adds 1 to the counter to update the counter (step S207).

After that, the application management part 5 determines whether the added counter is within the permitted number (step S208). When the result of the determination is that the added counter is within the permitted number (step S208; YES), the application management part 5 notifies the unauthorized access detector 62 of it (step S212). Then the access function part 61 receives this notification and thereafter returns a response indicating the access failure, to the application program 7a (step S213).

On the other hand, when the added counter exceeds the permitted number (step S207; NO), the application management part 5 notifies the unauthorized access detector 62 of over the permitted number (step S209). When receiving the notification of over the permitted number, the unauthorized access detector 62 determines that the application program 7a made unauthorized access, and the application deactivation controller 63 instructs the application management part 5 to deactivate the application program 7a (step S210). In response thereto, the application management part 5 performs the control to deactivate the application program 7a (step S211).

In the mobile communication terminal 1 described above, the access control part 6 independent of application programs 7 relays access of an application program 7 to noncontact IC card 8 and, when detecting unauthorized access during that operation, the access control part 6 performs the control to deactivate the application program 7. Since the data access function is located in the part different from the application programs 7, particularly, in the platform part 3 normally hard to falsify as described above, it is feasible to detect unauthorized access more securely even in a case where an application program 7 itself contains an unauthorized code. Therefore, it is feasible, for example, to prevent a malicious content provider from making use of an application program and leaking personal information stored in the noncontact IC card 8.

The detection of unauthorized access of application program 7 is carried out based on the access authority information managed corresponding to an individual application program 7 and type of access. This realizes more flexible access control for each application program to the noncontact IC card.

Furthermore, since the detection of unauthorized access of application program 7 is determined based on the response content from the noncontact IC card 8, unauthorized access by an application program without permission can be prevented in the case where the permission of access in the noncontact IC card 8 is made by the data storage area information or authentication code. As a result, it becomes feasible, for example, to exclude an unauthorized attack of analyzing a personal identification number for access to the noncontact IC card 8 and leaking it.

In the present invention, preferably, the mobile communication terminal further comprises the access authority storage storing the access authority information to indicate an access authority of an application program to the noncontact IC card, and the access control part performs the detection of unauthorized access, based on whether the access of the application program to the noncontact IC card is permitted in the access authority information stored in the access authority storage. In this case, more flexible access control is achieved for access of each application program to the noncontact IC card.

Furthermore, preferably, the access control part accepts an access request containing the data storage area information to specify a data storage area in the noncontact IC card, from an application program, thereafter receives a response to the access request from the noncontact IC card, and performs the detection of unauthorized access, based on whether the received response contains the information indicating an access failure. This configuration can prevent unauthorized access of an application program without permission, for example, in the case where the permission of access in the noncontact IC card is made by a code indicating a data area.

Yet furthermore, preferably, the access control part accepts an access request containing an authentication code for access from an application program to the noncontact IC card, thereafter receives a response to the access request from the noncontact IC card, and performs the detection of unauthorized access, based on whether the received response contains information indicating an access failure. With this access control part, unauthorized access of an application program without permission can be prevented, for example, in the case where the permission of access in the noncontact IC card is made by an authentication code such as a personal identification number.

The present invention is by no means limited to each of the above-described embodiments. For example, the application programs 7 are not limited to those described in the JAVA (registered trademark) language, but they may be those described in any other language such as the C language.

### Industrial Applicability

The present invention is applicable to the mobile communication terminal and data access control method with the function of controlling data access from application programs, and adequately prevents unauthorized access to internal data.

## Claims

1. A mobile communication terminal comprising:
a noncontact IC card;
a platform part being an application program interface for getting an application program running;
an application management part for controlling activation and deactivation of an application program; and
an access control part operating in the platform part, and adapted to relay access from an application program to the noncontact IC card;
wherein, when detecting unauthorized access from an application program to the noncontact IC card, the access control part instructs the application management part to deactivate the application program.

2. The mobile communication terminal according to Claim 1, further comprising an access authority storage part storing access authority information to indicate an access authority of an application program to the noncontact IC card,
wherein the access control part detects the unauthorized access, based on whether access of the application program to the noncontact IC card is permitted in the access authority information stored in the access authority storage part.

3. The mobile communication terminal according to Claim 1 or 2,
wherein the access control part accepts an access request containing data storage area information to specify a data storage area in the noncontact IC card, from an application program, and thereafter receives a response to the access request from the noncontact IC card, and
wherein the access control part detects the unauthorized access, based on whether information to indicate an access failure is contained in the received response.

4. The mobile communication terminal according to any one of Claims 1 to 3,
wherein the access control part accepts an access request containing an authentication code for access to the noncontact IC card, from an application program, and thereafter receives a response to the access request from the noncontact IC card, and
wherein the access control part detects the unauthorized access, based on whether information to indicate an access failure is contained in the received response.

5. A data access control method of controlling data access of an application program running on a platform in a mobile communication terminal incorporating a noncontact IC card, comprising:
an access control step wherein an access control part operating in the platform part relays access from an application program to the noncontact IC card; and
a program deactivation step wherein, when detecting unauthorized access from an application program, the access control part instructs an application management part, which is adapted to control activation and deactivation of an application program, to deactivate the application program.
